# EUROPÄISCHE PATENTANMELDUNG

(11) **EP 1 271 036 A1**
(43) Veröffentlichungstag der Anmeldung: **02.01.2003**
(21) Anmeldenummer: 02090204.5
(22) Anmeldetag: 06.06.2002
(51) Int. Cl.: F16L 13/14

(54) **Rohrpressverbindung**

(30) Priorität: 20.06.2001 DE 10130110
(71) Anmelder: Mapress GmbH & Co. KG, 40764 Langenfeld (DE)
(72) Erfinder: Sedlak, Bernd, 45478 Mülheim (DE)
(74) Vertreter: Meissner, Peter E., Dipl.-Ing.

(57) **Zusammenfassung**

Die Erfindung betrifft eine Rohrpressverbindung, bestehend aus einem metallischen Preßfrtting (1), der mindestens einen im Querschnitt wulstartig ausgebildeten, ein Dichtelement (3,3.1) aufnehmenden Abschnitt (2,2') und einen daran anschließenden, der Einschubseite zugewandten und/oder der Einschubseite abgewandten, zylindrisch ausgebildeten Abschnitt (5,5.1) aufweist, und einem Leitungsrohr (8), dessen glatt ausgebildeter Endbereich nach dem Einschub in den Pressfitting am Absatz (6) zur Anlage kommt, um mittels eines den Preßfitting umfassenden mindestens zwei Pressbacken aufweisenden Presswerkzeuges eine unlösbare dichte Rohrpressverbindung zu bilden. Dabei ist im Einschubbereich des metallischen Pressfittings (1,16) zwischen der Außenseite des Leitungsrohres (8) und der Innenseite des metallischen Pressfittings (1,16) mindestens eine dünnwandige Zwischenhülse (9,9.1) angeordnet, wobei die halbe Differenz zwischen der lichten Weite des ersten zylindrisch ausgebildeten Abschnitts (5) und dem Außendurchmesser des Leitungsrohres (8) nahezu der Wanddicke der Zwischenhülse (9,9.1) entspricht.

## Beschreibung

Die Erfindung betrifft eine Rohrpressverbindung bestehend aus einem metallischen Pressfitting und einem Leitungsrohr sowie einem Dichtelement gemäß dem Oberbegriff des Patentanspruches 1.

Rohrpressverbindungen werden von verschiedenen Herstellern angeboten (Mapress, Seppelfricke, Viegener usw.). Den von diesen Herstellem angebotenen Systemen ist gemeinsam, dass zwischen dem eingeschobenen Rohrende und dem Außenfitting ein Dichtring angeordnet ist. Dafür weist der Fitting eine oder auch zwei (Firma Seppelfricke) sich nach außen erstreckende Ringwulste auf, in der der Dichtring angeordnet ist. Bei der Verpressung werden dieser Wulstbereich und mindestens ein benachbarter zylindrisch ausgebildeter Abschnitt gleichzeitig verpresst.

Darüber hinaus gibt es die von anderen Herstellem angebotenen Systeme, die mit einem Innenfitting arbeiten (Fränkische Rohrwerke, Geberit, Roth, Unipipe usw.). Der größte Teil dieser genannten Hersteller verwendet als Rohr ein Verbundrohr. Bei diesem Verbundrohr handelt es sich um ein sogenanntes Dreischichtenrohr, bei dem zwischen einem dickwandigen Innenrohr aus PE und einem dickwandigen äußeren Hüllabschnitt aus PE-HD ein eine Diffusionssperre bildendes längsnahtgeschweißtes Aluminiumrohr angeordnet ist.

Bei einigen Herstellern, die Verbundrohre verwenden, erfolgt die Verpressung mittels einer außen über das Verbundrohr geschobenen Verpresshülse (z.B. Fränkische Rohrwerke, Unipipe). Die Firma Roth dagegen setzt ein Kunststoffrohr ein, wobei die Abstützung durch einen in das Kunststoffrohr einschiebbaren Stützkörper erfolgt.

Nachteilig bei allen Lösungen mit einem Innenfitting ist die Verminderung des Leitungsquerschnittes. Zusätzlich entstehen an den unstetigen Übergängen zwischen Innenfitting und Rohr in der Strömung Wirbel, die den Strömungswiderstand entsprechend erhöhen. Von Vorteil ist, dass sich Verbundrohre wegen ihrer Biegsamkeit sehr gut verlegen lassen.

Bei der Abwägung der Vor- und Nachteile der sich am Markt etablierten Systeme sind Überlegungen angestellt worden, ob man nicht versuchen sollte, die Vorteile beider Systeme durch Kombination von Außenfitting und Verbundrohr zu nutzen. Dem steht aber entgegen, dass die Abmessungen der Leitungsrohre auf den jeweiligen Fittingtyp abgestimmt sind.

Vergleicht man die in den Prospekten der Hersteller angegebenen Werte für die Leitungsrohre, stellt man fest, dass die Verbundrohre im Außendurchmesser immer geringer sind als vergleichbare Metallrohre. Beim Einschieben eines solchen im Durchmesser kleineren Verbundrohres in einen für Metallrohrabmessungen ausgelegten Pressfitting würde sich ein nicht unerheblicher Spalt zwischen Verbundrohr und Pressfitting bilden, der entweder nur schwer oder gar nicht durch das Verpressen zu überbrücken wäre. Zumindest würde die so hergestellte Rohrverbindung nicht den für eine Zulassung erforderlichen Abnahmekriterien genügen.

Eine Lösungsmöglichkeit wäre, den Pressfitting entsprechend kleiner auszulegen, so dass die kleinere Verbundrohrabmessung dazu passen würde. Dem steht aber entgegen, dass dann die Pressbacken der kleineren Pressfittingkontur angepasst werden müssten. Da aber inzwischen mehr als 150.000 Pressbacken im Markt sind, besteht seitens der Anwender wenig Bereitschaft, sich einen weiteren Werkzeugsatz für jede Nennabmessung zuzulegen. Zudem hätte dies den Nachteil, dass Pressbacken vertauscht werden könnten mit allen Konsequenzen für die Qualität der Verpressung.

Aufgabe der Erfindung ist es, eine Rohrpressverbindung anzugeben, die auch bei einer Kombination von einem eine größere lichte Weite aufweisenden metallischen Pressfitting mit einem einen kleineren Außendurchmesser aufweisenden Leitungsrohr, insbesondere Verbundrohr, den Abnahmekriterien genügt.

Diese Aufgabe wird ausgehend vom Oberbegriff in Verbindung mit den kennzeichnenden Merkmalen des Anspruches 1 gelöst. Vorteilhafte Weiterbildungen sind jeweils Gegenstand von Unteransprüchen.

Nach der Lehre der Erfindung ist im Einschubbereich des metallischen Pressfittings zwischen der Außenseite des Leitungsrohres und der Innenseite des metallischen Pressfittings eine dünnwandige Zwischenhülse angeordnet, wobei die halbe Differenz zwischen der lichten Weite des ersten zylindrisch ausgebildeten Abschnitts und dem Außendurchmesser des Leitungsrohres nahezu der Wanddicke der Zwischenhülse entspricht.
Damit wird der Spalt zwischen dem im Außendurchmesser kleineren Leitungsrohr und der größeren lichten Weite des metallischen Pressfittings überbrückt. Vorzugsweise erstreckt sich eine erste Zwischenhülse vom Absatz des ersten zylindrisch ausgebildeten Abschnittes bis zum Dichtelement.

Bei einem metallischen Pressfitting mit einem zusätzlich der Einschubseite zugewandten zylindrisch ausgebildeten Abschnitt ist die Anordnung einer zweiten Zwischenhülse vorgesehen, die sich vom stimseitigen Ende des Pressfittings bis zum Dichtelement erstreckt. Ersatzweise für den nicht mehr wirkenden Absatz weist die erste Zwischenhülse im Endbereich des Einschubes einen nach innen gerichteten Anschlag auf.

Im Sinne einer Fixierung der Zwischenhülse im Pressfitting weist die zweite Zwischenhülse im stimseitigen Endbereich einen nach außen gerichteten Anschlag auf. Auch die vorgeschlagene Einführhülse für die erste Zwischenhülse wirkt im Sinne einer Fixierung. Sollte die Elastizität der Zwischenhülse nicht ausreichen, um sie in den Pressfitting einführen zu können, wird altemativ vorgeschlagen, die Zwischenhülse in Längsrichtung zu schlitzen, damit sie im zusammengepressten Zustand eingeführt werden und danach aufspringen kann. Wahlweise wird die Zwischenhülse aus Metall oder Kunststoff hergestellt. Sie kann mit einer Ausziehsicherung versehen sein, wie sie bereits aus der DE 196 31 574 C1 bekannt ist.

Falls erforderlich wird das Dichtelement den neuen Verhältnissen angepasst in der Weise, dass der Querschnitt oval ist mit einer parallel zur Längsachse liegenden kürzeren Erstreckung.

Im Sinne einer kundenfreundlichen Anwendung des neuen Systems wird sowohl die Zwischenhülse als auch das Dichtelement zuvor im Pressfitting montiert. Der Anwender kann dann in gewohnter Weise das Leitungsrohr in den Pressfitting bis zum Absatz einschieben und dann die Verpressung durchführen. Presswerkzeug und Pressbacken können unverändert eingesetzt werden, so dass keine separate Lagerhaltung notwendig ist. Eine Verwechslung mit den verschieden ausgerüsteten Pressfittings ist ausgeschlossen, da das eine größere Außenabmessung aufweisende übliche Leitungsrohr nicht in den mit einer Zwischenhülse versehenen Pressfitting einschiebbar ist. Umgekehrt hätte das im Außendurchmesser kleinere Verbundrohr keinen Halt im größeren metallischen Pressfitting, so dass eine Verlegung der Leitung vor der Verpressung schwierig, unter Umständen sogar nicht möglich wäre

Weitere Merkmale, Vorteile und Einzelheiten der Erfindung ergeben sich aus der nachfolgenden Beschreibung von in einer Zeichnung dargestellten Ausführungsbeispielen. Es zeigen:
- **Figur 1**: im halbseitigen Längsschnitt und halbseitiger Ansicht eine erste Ausführungsform einer erfindungsgemäß ausgebildeten Rohrpressverbindung
- **Figur 2**: wie Figur 1, aber eine zweite Ausführungsform
- **Figur 3**: wie Figur 1, aber mit einer Stützhülse
- **Figur 4**: wie Figur 1, aber in einer vergrößerten Darstellung
- **Figur 5**: wie Figur 1, aber in einer vergrößerten Darstellung

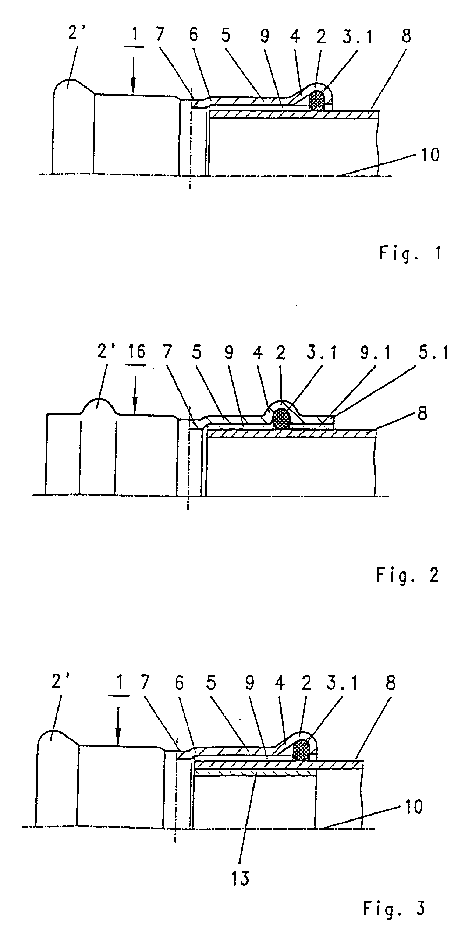

**Figur** 1 zeigt in einem halbseitigen Längsschnitt und einer halbseitigen Ansicht eine erste Ausführungsform einer erfindungsgemäß hergestellten Rohrpressverbindung. Sie besteht aus einem metallischen Pressfitting 1 der bekannten Bauart mit einem an beiden Enden angeordneten sich nach außen erstreckenden Ringwulst 2, 2', in dem ein Dichtelement 3.1 anordenbar ist. Mit einem schräg abfallenden Abschnitt 4 geht die Ringwulst 2 über in einen zylindrisch ausgebildeten Abschnitt 5. Dieser erstreckt sich bis zu einem Absatz 6, der dann übergeht in einen zweiten zylindrisch ausgebildeten Abschnitt 7, dessen Innendurchmesser kleiner ist als der vorgenannte Abschnitt 5.

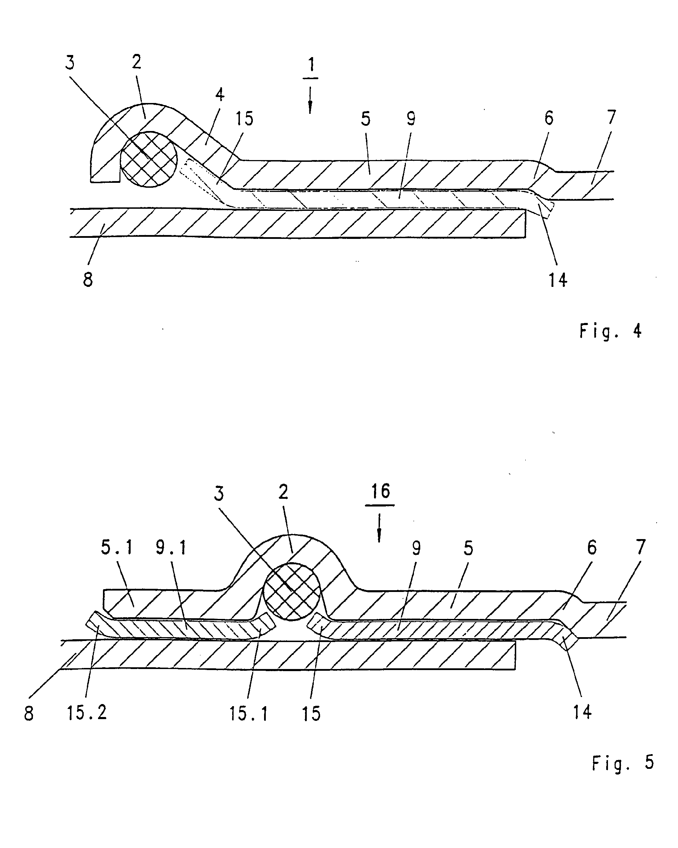

Erfindungsgemäß ist zwischen der Außenseite des im Durchmesser kleineren Leitungsrohres 8 und der Innenseite des zylindrisch ausgebildeten Abschnittes 5 des metallischen Pressfittings 1 eine, hier nur prinzipiell dargestellte, Zwischenhülse 9 angeordnet. Die Einzelheiten werden in **Figur 4** erläutert.

Beispielsweise ist das Leitungsrohr 8 ein Verbundrohr der bekannten Art und die Zwischenhülse 9 ist aus Kunststoff hergestellt. Die Zwischenhülse 9 erstreckt sich vom Absatz 6 bis zum Dichtelement 3.1. Zur Überbrückung des Spaltes weist in diesem Ausführungsbeispiel das Dichtelement 3.1 einen ovalen Querschnitt auf mit einer parallel zur Längsachse 10 liegenden kürzeren Erstreckung. Diese Ausbildung ist nicht in jedem Fall erforderlich, da dies von der Toleranzpaarung Leitungsrohr 8, Dichtelement 3.1 und Pressfitting 1 abhängig ist. Die Zwischenhülse 9 kann mit einer Ausziehsicherung versehen sein, wie sie bereits in der DE 196 31 574 C1 beschrieben ist.

In **Figur 2** ist in einem gleichen halbseitigen Längsschnitt und einer halbseitigen Ansicht wie **Figur 1** eine zweite Ausführungsform dargestellt, wobei für gleiche Teile gleiche Bezugszeichen gewählt worden sind. Auch diese Ausführungsform besteht aus einem metallischen Pressfitting 16 der bekannten Bauart, nur mit dem Unterschied, dass sich auch auf der dem Einschub zugewandten Seite ein zylindrisch ausgebildeter Abschnitt 5.1 an die Ringwulst 2 anschließt. In diesem Bereich ist ebenfalls eine hier nur prinzipiell dargestellte Zwischenhülse 9.1 angeordnet. Die Einzelheiten werden in **Figur 5** erläutert.

**Figur 3** zeigt eine Variante von **Figur 1** in der Art, dass im Verpressbereich das Leitungsrohr 8 innenseitig mit einer Stützhülse 13 versehen ist. Die Anordnung einer solchen Stützhülse 13 kann erforderlich sein, wenn die Steifigkeit des Leitungsrohres (z.B. Kunststoffrohr) nicht ausreichend ist.

**Figur 4** zeigt in einer vergrößerten Darstellung die Einzelheiten der erfindungsgemäßen Anordnung gemäß **Figur 1**. Zum einen ist am Einschubende an der Zwischenhülse 9 ein nach innen gerichteter Anschlag 14 vorgesehen, damit das Leitungsrohr 8 nach dem Einschub dort zur Anlage kommt. Da das Leitungsrohr 8 im Außendurchmesser kleiner ist als sonst üblich, kann der Absatz 6 als Anschlag nicht mehr wirksam sein. Als Einführhilfe weist der vordere Bereich der Zwischenhülse 9 eine trompetenartige Aufweitung 15 auf. Sie dient gleichzeitig der Fixierung der Zwischenhülse 9 im Pressfitting1. Im Regelfall wird die Elastizität der Zwischenhülse 9 ausreichend sein, um diese im Pressfitting montieren zu können. Falls nicht, kann die Zwischenhülse 9 längs geschlitzt werden, um sie radial zusammendrücken zu können.

**Figur 5** zeigt in einer vergrößerten Darstellung die Einzelheiten der erfindungsgemäßen Anordnung gemäß **Figur 2**. Auch bei diesem Pressfittingtyp 16 ist die erste Zwischenhülse 9 mit einem Anschlag 14 und einer trompetenartigen Aufweitung 15 versehen. Die zweite vor dem Dichtring 3 liegende Zwischenhülse 9.1 weist an beiden Enden je eine trompetenartige Aufweitung 15.1; 15.2 auf. Die im Stirnseitenbereich liegende trompetenartige Aufweitung 15.2 dient als Einführhülse für das Leitungsrohr sowie als Axialsicherung. Wie schon unter Figur 1 erläutert, ist gegebenenfalls eine Anpassung des Dichtringes 3 erforderlich.

| **Bezugszeichenliste** | |
|---|---|
| **Nr.** | **Bezeichnung** |
| 1 | Pressfitting |
| 2, 2' | Ringwulst |
| 3, 3.1 | Dichtelement |
| 4 | schräg abfallender Abschnitt |
| 5 | erster zylindrisch ausgebildeter Abschnitt |
| 5.1 | dritter zylindrisch ausgebildeter Abschnitt |
| 6 | Absatz |
| 7 | zweiter zylindrisch ausgebildeter Abschnitt |
| 8 | Leitungsrohr |
| 9, 9.1 | Zwischenhülse |
| 10 | Längsachse |
| 11 | Pressfitting |
| 12 | dritter zylindrisch ausgebildeter Abschnitt |
| 13 | Stützhülse |
| 14 | Anschlag Zwischenhülse |
| 15 | trompetenartige Aufweitung Zwischenhülse |
| 16 | Pressfitting (zweite Ausführungsform) |

## Patentansprüche

1. Rohrpressverbindung, bestehend aus einem metallischen Preßfitting, der mindestens einen im Querschnitt wulstartig ausgebildeten, ein Dichtelement aufnehmenden Abschnitt und einen daran anschließenden, der Einschubseite zugewandten und/oder der Einschubseite abgewandten, zylindrisch ausgebildeten Abschnitt aufweist, wobei der der Einschubseite abgewandte zylindrisch ausgebildete Abschnitt einen sich nach innen erstreckenden Absatz aufweisend in einen daran anschließenden zylindrisch ausgebildeten Abschnitt übergeht, dessen Innendurchmesser kleiner ist als die anderen zylindrisch ausgebildeten Abschnitte und einem Leitungsrohr, dessen glatt ausgebildeter Endbereich nach dem Einschub in den Pressfitting am Absatz zur Anlage kommt, um mittels eines den Preßfitting umfassenden mindestens zwei Pressbacken aufweisenden Presswerkzeuges eine unlösbare dichte Rohrpressverbindung zu bilden, wobei während des Verpressens die Pressbacken sowohl auf die Ringwulst einschließlich des darin eingelegten Dichtelementes als auch auf den der Einschubseite zugewandten und/oder abgewandten zylindrisch ausgebildeten Abschnitt des Preßfittings einwirken,
**dadurch gekennzeichnet,**
**dass** im Einschubbereich des metallischen Pressfittings (1; 16) zwischen der Außenseite des Leitungsrohres (8) und der Innenseite des metallischen Pressfittings (1; 16) mindestens eine dünnwandige Zwischenhülse (9; 9.1) angeordnet ist,
wobei die halbe Differenz zwischen der lichten Weite des ersten zylindrisch ausgebildeten Abschnitts (5; 5.1) und dem Außendurchmesser des Leitungsrohres (8) nahezu der Wanddicke der Zwischenhülse (9; 9.1) entspricht.

2. Rohrpressverbindung nach Anspruch 1,
**dadurch gekennzeichnet,**
**dass** sich eine erste Zwischenhülse (9) vom Absatz (6) bis zum Dichtelement (3; 3.1) erstreckt.

3. Rohrpressverbindung nach Anspruch 1 und 2
**dadurch gekennzeichnet,**
**dass** sich bei einem metallischen Pressfitting (16) mit einem zusätzlich der Einschubseite zugewandten zylindrisch ausgebildeten Abschnitt (5.1) eine zweite Zwischenhülse (9.1) vom stirnseitigen Ende des Pressfittings (16) bis zum Dichtelement (3) erstreckt.

4. Rohrpressverbindung nach Anspruch 2
**dadurch gekennzeichnet,**
**dass** die erste Zwischenhülse (9) im Endbereich des Einschubes einen nach innen gerichteten Anschlag (14) aufweist.

5. Rohrpressverbindung nach Anspruch 3
**dadurch gekennzeichnet,**
**dass** die zweite Zwischenhülse (9.1) im stirnseitigen Endbereich eine trompetenartige Aufweitung (15.2) aufweist.

6. Rohrpressverbindung nach Anspruch 2 und 3
**dadurch gekennzeichnet,**
**dass** mindestens die erste Zwischenhülse (9) im Bereich des Dichtelementes (3.1) mit einer Einführhilfe für das Leitungsrohr (8) versehen ist.

7. Rohrpressverbindung nach Anspruch 6
**dadurch gekennzeichnet,**
**dass** die Einführhilfe als trompetenartige Aufweitung (15; 15.2) ausgebildet ist.

8. Rohrpressverbindung nach Anspruch 6
**dadurch gekennzeichnet,**
**dass** die Einführhilfe als Konus ausgebildet ist.

9. Rohrpressverbindung nach einem der Ansprüche 1 bis 8
**dadurch gekennzeichnet,**
**dass** die Zwischenhülse in Längsrichtung geschlitzt ist.

10. Rohrpressverbindung nach einem der Ansprüche 1 bis 9
**dadurch gekennzeichnet,**
**dass** die Zwischenhülse mit einer Ausziehsicherung versehen ist.

11. Rohrpressverbindung nach einem der Ansprüche 1 bis 10
**dadurch gekennzeichnet,**
**dass** die Zwischenhülse aus Metall ist.

12. Rohrpressverbindung nach einem der Ansprüche 1 bis 10
**dadurch gekennzeichnet,**
**dass** die Zwischenhülse aus Kunststoff besteht.

13. Rohrpressverbindung nach einem der Ansprüche 1 bis 12
**dadurch gekennzeichnet,**
**dass** das Dichtelement (3.1) einen ovalen Querschnitt aufweist mit einer parallel zur Längsachse liegenden kürzeren Erstreckung.

14. Rohrpressverbindung nach einen der Ansprüche 1 bis 13
**dadurch gekennzeichnet,**
**dass** das Leitungsrohr aus Metall ist.

15. Rohrpressverbindung nach einem der Ansprüche 1 bis 13
**dadurch gekennzeichnet,**
**dass** das Leitungsrohr ein Verbundrohr ist.

16. Rohrpressverbindung nach einem der Ansprüche 1 bis 13
**dadurch gekennzeichnet,**
**dass** das Leitungsrohr aus Kunststoff ist.

17. Rohrpressverbindung nach den Ansprüchen 15 und 16
**dadurch gekennzeichnet,**
**dass** das Leitungsrohr innenseitig im Einschubbereich mit einer Stütznülse (13) versehen ist.
